# FASCICULE DE BREVET EUROPEEN

(11) **EP 0 574 500 B1**
(45) Date de publication et mention de la délivrance du brevet: **11.09.1996**
(21) Numéro de dépôt: 92907306.2
(22) Date de dépôt: 26.02.1992
(51) Int. Cl.: F16L 59/20

(54) **CONDUITE POUR LE TRANSPORT DE FLUIDES, EN PARTICULIER D'HYDROCARBURES**
ROHRLEITUNG FÜR DEN TRANSPORT VON FLÜSSIGKEITEN, INSBESONDERE VON KOHLWASSERSTOFFEN
PIPE FOR CARRYING FLUIDS, PARTICULARLY HYDROCARBONS

(30) Priorité: 26.02.1991 FR 9102266
(43) Date de publication de la demande: 22.12.1993
(73) Titulaire: MARCHAL, Philippe, F-92420 Vaucresson (FR)
(72) Inventeur: Marchal, Philippe, F-92420 Vaucresson (FR); Jullien, Claude, (FR)
(74) Mandataire: Thibon-Littaye, Annick
(86) Numéro de dépôt international: FR9200175
(87) Numéro de publication internationale: WO9214962

(56) Documents cités:
- DE-A- 3 322 405
- DE-A- 3 534 994
- GB-A- 1 348 318
- GB-A- 2 191 842
- US-A- 4 635 967

## Description

La présente invention est relative à une conduite pour le transport de fluides, en particulier d'hydrocarbures réalisée par assemblage de tubes métalliques calorifugés.

On sait que dans un certain nombre de cas, le pétrole brut est extrait du sol à une température qui excède de plusieurs dizaines de degrés la température ambiante et que, lorsque ce pétrole brut en contient, son refroidissement à la température ambiante (ou même à des températures supérieures à la température ambiante) provoque par exemple une précipitation des produits paraffiniques qui conduit progressivement au bouchage de la conduite.

On a déjà tenté de pallier ces difficultés en entourant les conduites avec des isolants épais à base de matériaux expansés qui doivent être eux-mêmes protégés par une couche de matériaux rigides de manière à supporter les différentes contraintes auxquelles la conduite est soumise tant au moment de sa mise en place que lors de son utilisation.

Ces isolants présentent l'inconvénient d'être encombrants et d'augmenter notablement les dimensions extérieures de la conduite. Ils augmentent aussi beaucoup sa flottabilité, ce qui oblige le plus souvent à augmenter son lestage.

Dans cette dernière hypothèse, il est alors nécessaire d'alourdir la conduite en l'enrobant dans du béton qu'il est presque toujours difficile de faire adhérer à la paroi externe de l'isolant.

Ces conduites connues présentent également l'inconvénient de se corroder facilement dès lors que surviennent des détériorations de l'isolant externe ou en raison des dilatations thermiques qui sont différentes entre le tube d'acier et l'isolant.

On a également imaginé de réaliser des tronçons de tube isolants constitués par un élément tubulaire externe et un élément tubulaire interne qui sont soudés à leurs extrémités et qui contiennent entre eux un élément isolant afin de constituer des conduites.

De tels tronçons de tube se sont révélés d'une utilisation peu satisfaisante en raison notamment des difficultés que l'on éprouve pour réunir les éléments tubulaires entre eux afin de constituer des conduites.

La présente invention vise à obtenir d'une manière simple et économique une conduite réalisée à partir de tronçons de tubes d'acier isolés thermiquement mais qui ne comportent aucun isolant externe et qui peuvent être manipulés, mis en place et utilisés pour réaliser des conduites immergées ou terrestres, exactement de la même manière que les tronçons de tubes d'acier conventionnels qui ne comportent pas d'isolant.

Le document de brevet britannique GB-A-1 348 318 décrit une conduite pour le transport de liquides cryogéniques constituée par des tronçons de tubes d'acier isolés thermiquement du type comportant une enveloppe tubulaire externe en acier, une enveloppe cylindrique interne en acier de plus faible diamètre, l'enveloppe interne étant soudée de manière étanche à l'enveloppe externe à chacune des extrémités des tronçons de tube en laissant entre les deux enveloppes un volume annulaire fermé, contenant de préférence un matériau isolant contre la chaleur. Au niveau de chaque raccord entre deux tronçons de tubes, les extrémités des enveloppes internes des deux tronçons de conduite sont soudées l'une à l'autre, tandis qu'un manchon réunit les extrémités des enveloppes externes de telle sorte que lorsqu'il s'exerce sur la conduite des efforts de traction, de compression ou de flexion, ledit manchon communique ces efforts aux enveloppes externes en conférant à la conduite une résistance mécanique au niveau de chaque raccord qui est au moins égale à celle des tronçons de tube.

Suivant la présente invention, le manchon est vissé sur l'une au moins des enveloppes externes notamment sur les deux selon un premier mode de réalisation par un filetage cylindrique de préférence à fronts de filets droits qui comporte entre les filets mâles et femelles un jeu qui est suffisant pour compenser les défauts d'alignement et de positionnement des deux tronçons lorsqu'ils sont réunis par soudure de leurs enveloppes internes et l'espace compris entre les filets mâles et les filets femelles est garni par une substance, par exemple polymérisable, qui transmet les efforts de compression ou de traction s'exerçant entre le manchon et les enveloppes externes.

Pour ce faire, les surfaces totales des flancs de filets doivent être choisies suffisamment grandes pour tenir compte de la résistance à l'écrasement de la substance qui est introduite entre les filets mâles des enveloppes externes et les filets femelles du manchon.

L'invention permet ainsi, d'une manière simple et économique, le raccordement de deux tronçons de canalisation par une seule soudure réunissant de manière étanche les enveloppes internes, les enveloppes externes étant réunies l'une à l'autre par la substance, le plus souvent applicable à froid, qui est placée dans les filetages.

De surcroît, le jeu entre les filets du manchon et des enveloppes externes est suffisant pour compenser tous les défauts de positionnement qui peuvent résulter de la réunion des deux tronçons par la soudure de leurs enveloppes internes, qu'il s'agisse de défauts d'alignement ou de parallaxe des axes des deux tronçons ou encore des décalages de pas entre les filets des deux enveloppes externes.

La substance introduite entre les filets peut être par exemple une résine telle qu'une résine époxy, notamment connue sous la marque Araldite, dont la polymérisation ne s'effectue pas avec un retrait, mais de préférence avec une expansion. On peut également utiliser des élastomères polymérisables et des produits tels que des brais de houille que l'on applique à chaud et que l'on laisse refroidir.

Dans une variante de réalisation, la transmission des efforts entre la manchon et les enveloppes externes des deux tronçons s'effectue par le fait que lors de la flexion de la canalisation, les filets mâles des enveloppes externes des deux tronçons viennent prendre appui sur les filets femelles du manchon. Pour permettre une flexion de l'enveloppe interne au niveau du raccord qui soit suffisante pour assurer la compensation du jeu existant entre les filets du manchon et ceux des enveloppes externes, les collerettes reliant à l'extrémité de chaque tronçon les enveloppes interne et externe sont soudées sur les enveloppes internes à une distance suffisante des extrémités des enveloppes internes.

Dans cette variante, il subsiste au niveau d'un raccord une longueur libre d'enveloppe interne qui peut être par exemple de l'ordre d'un mètre.

Cette caractéristique est également intéressante dans la première variante de ce premier mode de réalisation car elle permet d'assurer la continuité mécanique de la canalisation même dans l'hypothèse où la substance injectée n'occupe que partiellement l'espace entre les filets du manchon et des enveloppes externes et de ce fait ne présente qu'une résistance mécanique insuffisante.

Dans un second mode de réalisation de l'invention, le manchon est muni à une de ses extrémités d'un filetage interne qui est vissé sur un filetage externe correspondant réalisé sur l'extrémité de l'enveloppe externe d'un premier tronçon de tube de la manière déjà définie, tandis que l'autre extrémité dudit manchon vient s'appliquer contre une butée solidaire de l'enveloppe tubulaire externe d'un second tronçon de tube voisin avec une force suffisante pour que la conduite présente au niveau des raccords entre les différents tronçons une résistance mécanique au moins égale à celle des autres parties de la conduite.

Selon une variante préférée, le filetage par lequel le manchon se visse sur l'enveloppe tubulaire externe du premier tronçon de tube est un filetage cylindrique avec des fronts de filets porteurs sensiblement perpendiculaires à l'axe de la conduite, de manière à permettre la compensation des légères parallaxes qui peuvent se produire lors de la réunion par soudure des enveloppes tubulaires internes et qui font que les axes des différents tronçons de la conduite sont légèrement décalés bien que restant parallèles entre eux.

Selon ce mode de réalisation, le manchon est vissé de manière à lui conférer lors du montage, une compression axiale d'une valeur supérieure à l'extension maximale que certaines de ses génératrices peuvent subir lors de la mise en place ou de l'utilisation de la conduite.

Conformément à l'invention, il est avantageux qu'après vissage, le manchon soit soudé à au moins une de ses extrémités sur l'enveloppe externe de l'un des tronçons, de manière à éviter son dévissage accidentel.

Le soudage à chaque extrémité du manchon permet d'isoler le volume annulaire compris entre le manchon et les enveloppes internes et d'éviter ainsi l'introduction dans ce volume, des fluides extérieurs à la conduite qui pourraient produire des corrosions.

Dans une variante de ce second mode de réalisation la butée sur laquelle vient prendre appui le manchon fileté lors de son vissage sur l'autre tronçon est munie d'une bague sphérique qui permet de compenser automatiquement les défauts d'alignement entre l'axe du manchon et celui de la butée.

Selon les deux modes de réalisation décrits ci-dessus pour éviter l'introduction de fluides extérieurs dans le volume annulaire compris entre le manchon et les enveloppes internes, ce volume peut être rempli par exemple d'une substance bitumeuse ou d'un matériau cellulaire tel qu'une mousse de polyuréthane qui a en outre l'avantage d'augmenter l'isolation de la conduite.

Dans une mise en oeuvre préférée de l'invention, la soudure des extrémités de l'enveloppe interne et de l'enveloppe externe d'un même tronçon s'effectue après avoir conféré à l'enveloppe interne un allongement par rapport à l'enveloppe externe qui correspond sensiblement à celui qui existe lorsque l'enveloppe interne est soumise par rapport à l'enveloppe externe à un écart de température qui est environ égal à la moitié de l'écart de température qui existera lors de l'utilisation de la conduite et qui provoquera l'échauffement de son enveloppe interne.

Selon un mode de mise en oeuvre avantageux de cette caractéristique, l'on préchauffe l'enveloppe interne jusqu'à environ la moitié de l'écart de température qui doit exister entre l'enveloppe interne et l'enveloppe externe lors de l'utilisation de la conduite et l'on assujettit alors les extrémités de deux enveloppes en les soudant dans cet état.

Il en résulte que lorsqu'un tronçon de tube selon l'invention est à une température homogène, l'enveloppe interne est en état d'extension alors que l'enveloppe externe est en état de compression. Cette situation évolue progressivement lorsque l'on fait circuler un fluide chaud à l'intérieur de la conduite, l'enveloppe externe se mettant alors progressivement en compression tandis que l'enveloppe externe se met progressivement en traction.

Conformément à l'invention, il est avantageux lorsque la conduite doit être utilisée pour le transport de fluide à température élevée, de réaliser les enveloppes internes et éventuellement les collerettes avec un métal présentant un faible coefficient de dilatation comme par exemple celui connu sous la dénomination INVAR.

On peut ainsi utiliser la conduite selon l'invention pour transporter de la vapeur à plus de 100°C.

Conformément à l'invention, les enveloppes interne et externe peuvent avoir des épaisseurs égales mais il est en général avantageux que les enveloppes internes des tronçons qui doivent être soudées entre elles pour réaliser les tronçons de conduite aient une épaisseur supérieure à celle des enveloppes externes dont la continuité est assurée par le manchon.

C'est ainsi que l'enveloppe interne peut avoir par exemple une épaisseur environ 3 à 4 fois plus forte que celle de l'enveloppe externe.

Selon un mode de réalisation particulier de l'invention, les enveloppes interne et externe sont réunies entre elles par soudure à l'aide de collerettes dont l'épaisseur est sensiblement égale à l'épaisseur de l'enveloppe la plus mince.

Pour limiter l'importance des ponts thermiques qui résultent de leur présence, ces collerettes s'étendent sur une longueur qui est de préférence comprise entre 3 et 5 fois la distance qui sépare la face externe de l'enveloppe interne de la face interne de l'enveloppe externe.

Dans un mode de réalisation particulier de l'invention, les collerettes qui réunissent les deux enveloppes à leurs extrémités ont une section en forme générale de S ou de demi-sinusoïde.

Dans une variante, les collerettes ont une forme cylindrique et leurs extrémités sont soudées sur des bossages annulaires solidaires des extrémités des enveloppes interne et externe qu'elles réunissent.

Dans une autre variante, les collerettes ont chacune une partie centrale cylindrique prolongée par deux parties tronconiques directement soudées à l'enveloppe tubulaire externe, et à l'enveloppe tubulaire interne.

Selon l'invention, les collerettes peuvent être avantageusement réalisées dans un alliage peu sensible à la chaleur, tel que celui connu sous le nom d'INVAR.

Conformément à un mode de réalisation préféré de l'invention, le volume annulaire fermé compris entre les deux enveloppes d'acier est garni par une pluralité de feuilles minces d'isolant anti-rayonnement thermique, lesdites feuilles étant de préférence séparées par des structures lacunaires non conductrices de la chaleur qui évitent qu'elles ne s'appliquent l'une contre l'autre. De telles feuilles isolantes peuvent être par exemple constituées par des feuilles d'aluminium de quelques centièmes de millimètres d'épaisseur.

Selon un autre mode de réalisation de l'invention, le volume annulaire fermé peut être rempli d'une matière synthétique expansée comme par exemple du polyéthylène ou du polyuréthane expansé.

Compte-tenu du fait que les tronçons de tube qui sont habituellement commercialisés ont des longueurs d'environ 12 mètres et que ces tubes sont soumis, notamment lors de la mise en place de la conduite, à d'importants efforts de flexion, il est prévu selon un mode préféré de l'invention de disposer à des intervalles appropriés, par exemple tous les mètres ou tous les deux mètres, des organes d'écartement qui sont placés entre l'enveloppe interne et l'enveloppe externe.

Ces organes d'écartement doivent être réalisés en une matière présentant une résistance mécanique suffisante mais qui n'est pas bonne conductrice de la chaleur, par exemple en une matière synthétique.

Pour limiter les ponts thermiques constitués par lesdits organes d'écartement, il est indiqué conformément à l'invention de ne pas leur donner une section constante sur la totalité du périmètre de leur enroulement. Ces organes peuvent par exemple, se présenter sous forme de plots ayant une dimension suffisante pour éviter que, lors des contraintes de flexion par exemple, l'enveloppe interne ne se collapse contre l'enveloppe externe, lesdits plots étant réunis entre eux par des sections de matériaux plus faibles, ce qui limite ainsi les transferts de chaleur.

Conformément à l'invention, il est avantageux que lorsque le tronçon de tube n'est soumis à aucune contrainte anormale, les organes d'écartement ne viennent au contact que de l'une des enveloppes.

Selon un autre mode de réalisation préféré de l'invention, on améliore sensiblement le caractère isolant de la conduite en créant dans l'espace compris entre l'enveloppe interne et l'enveloppe externe un vide élevé qui peut être par exemple, de l'ordre de 10⁻⁵ à 10⁻⁸ bars.

Cette mise sous vide peut être effectuée par les techniques conventionnelles qui impliquent généralement un dégazage préalable des surfaces métalliques par nettoyage ou par chauffage.

Dans une variante, le volume annulaire compris entre l'enveloppe interne et l'enveloppe externe peut être rempli avec un gaz moins conducteur de la chaleur que l'air, tel par exemple que le tétrachlorure de carbone ou le chloroforme.

Dans le but de mieux faire comprendre l'invention, on va en décrire maintenant à titre d'illustration et sans aucun caractère limitatif plusieurs modes de mises en oeuvre représentés sur le dessin annexé dans lequel :
- la figure 1 est une vue en coupe axiale d'un mode de réalisation du raccord de deux tronçons de conduite selon l'invention,
- la figure 2 est une vue en coupe longitudinale d'une variante de réalisation du raccord de la figure 1.

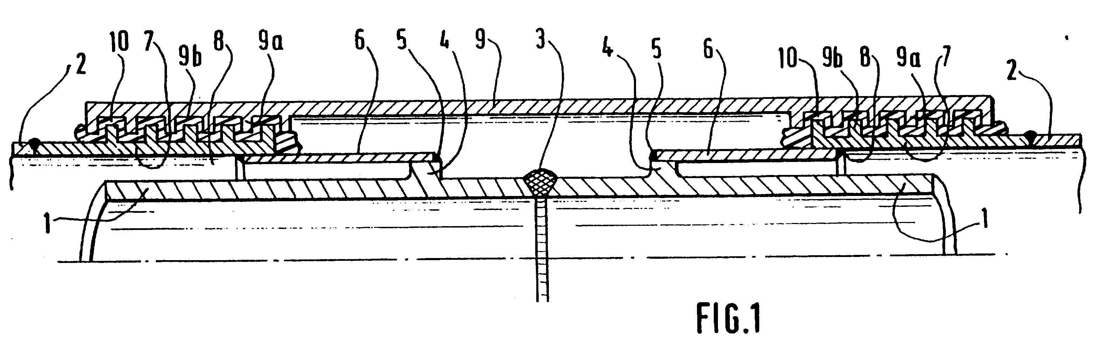

On a représenté sur la figure 1, le raccordement des extrémités des deux tronçons de conduite comportant chacun une enveloppe tubulaire interne 1 et une enveloppe tubulaire externe 2.

Dans ce mode de réalisation, au voisinage de l'extrémité de chacun des éléments d'une des enveloppes internes 1, on réalise par apport de métal une surépaisseur 4 dont la surface externe est ensuite usinée de manière à la rendre cylindriquement coaxiale avec l'enveloppe interne 1.

Une collerette cylindrique 6 est fixée à l'une de ses extrémités par un cordon de soudure 5 sur la surépaisseur 4 tandis qu'une pièce de forme 7 rapportée par soudure à l'extrémité de chacune des enveloppes externes 2 est assujettie sur la collerette circulaire 6 par un cordon de soudure 8.

La pièce 7 possède sur sa périphérie externe un filetage 9b dont les filets présentent dans le cas présent une section rectangulaire.

Un manchon cylindrique 9 comporte à chacune de ses extrémités un filetage femelle dont les filets 9a ont également une forme de section rectangulaire.

Comme on peut le remarquer sur la figure 1, il existe un jeu important entre les filets 9a et 9b de manière à ce que le manchon 9 qui avant la réunion des deux enveloppes internes 1 par la soudure 3 a été engagé sur l'un des deux tronçons de conduite puisse venir se visser à ces deux extrémités sur les filets 9b des éléments d'extrémité 7 des enveloppes tubulaires externes 2.

Ce jeu entre les filets 9a et 9b doit être suffisant pour compenser d'une part, les défauts d'alignement des deux enveloppes internes 1 réunies par le cordon de soudure 3 (défaut de parallaxe entre les axes des deux enveloppes 1 et défaut de parallèlisme de ces deux axes) ainsi que les écarts de pas qui peuvent exister entre les filets 9b d'un des tronçons de tubes et les filets 9b de l'autre tronçon.

Conformément à ce mode de réalisation de l'invention, on injecte entre les filets 9a et 9b un matériau tel que par exemple une résine époxy ou une résine araldique de préférence à polymérisation rapide et dont la polymérisation s'effectue sans retrait et si possible avec expansion.

On a représenté en 10 sur la figure 1 comment ce matériau occupe la totalité de l'espace compris entre les filets 9a et 9b.

Ce matériau de remplissage peut être facilement injecté entre les filets 9a et 9b à partir d'un ou plusieurs orifices non représentés réalisés dans la paroi externe du manchon 9.

Les deux extrémités 7 des enveloppes externes 2 peuvent être soit rapportées par soudure sur les tubes constituant les enveloppes 2 soit forgées et usinées aux extrémités de ces tubes.

Pour réaliser la conduite représentée sur la figure 1, on commence par rapporter de l'acier pour former une surépaisseur 4 au voisinage des extrémités des tubes constituant les enveloppes 1 puis on usine la surface externe de ces surépaisseurs pour les rendre concentriques à l'enveloppe interne 1.

Les extrémités 7 des enveloppes externes 2 sont rapportées par soudure sur les tubes constituant ces enveloppes 2, puis on soude en 8 une extrémité des collerettes 6 sur la surface interne des extrémités 7 des enveloppes externes 2.

On engage alors l'enveloppe interne 1 éventuellement munie de son revêtement isolant (non représenté sur la figure 1) à l'intérieur de l'enveloppe externe 2 munie à chacune de ses extrémités d'une collerette 6. Puis, à une extrémité du tronçon de tube, on soude en 5 l'extrémité libre de la collerette 3 à la surépaisseur 4 de l'enveloppe interne 1.

Conformément à un mode de réalisation préféré de l'invention, à l'autre extrémité du tronçon de tube, on procède à la soudure 5 de la collerette 6 sur la surépaisseur 4 de l'enveloppe intérieure 1 en plaçant cette enveloppe interne 1 en état d'extension, tandis que l'enveloppe externe 2 est placée en état de compression.

En procédant à la réunion par soudure des enveloppes internes et externes d'un même tronçon de conduite alors que l'enveloppe interne est étirée et que l'enveloppe externe est comprimée, on obtient une meilleure répartition des contraintes générales de la conduite lorsque l'on fait circuler un fluide chaud à l'intérieur de cette dernière, ce qui a pour effet de provoquer l'allongement de l'enveloppe interne 1.

Lorsque l'on a réalisé les différents tronçons de canalisation de cette manière, après avoir engagé un manchon 9 sur l'enveloppe externe de chaque tronçon, on procède à la réunion bout à bout des différents tronçons par les cordons de soudure 3 qui assurent ainsi la continuité des enveloppes internes 1.

Il suffit ensuite de déplacer et de visser le manchon 9 sur les filets 9b des deux tronçons de conduite et d'injecter le matériau de liaison entre les filets 9a et 9b pour obtenir la conduite selon l'invention.

Conformément à l'invention pour réduire le nombre de raccords sur la conduite, il est avantageux de réaliser des tronçons en soudant bout à bout au moins deux tubes de 12 mètres pour réaliser les enveloppes tubulaires de chaque tronçon de conduite.

Conformément à l'invention, la compression communiquée au manchon 7 doit être suffisante pour que le manchon reste comprimé, quelles que soient les contraintes et notamment les contraintes de flexion que l'on fait subir à la conduite lors de sa pose ou de son utilisation.

Les extrémités des éléments de l'enveloppe tubulaire 2 peuvent aussi être forgées et usinées de manière à recevoir une forme correspondante.

Conformément à un mode de mise en oeuvre préféré de l'invention, les éléments interne et externe sont respectivement mis en tension et en compression avant de procéder à la réunion de toutes les extrémités des enveloppes interne et externe.

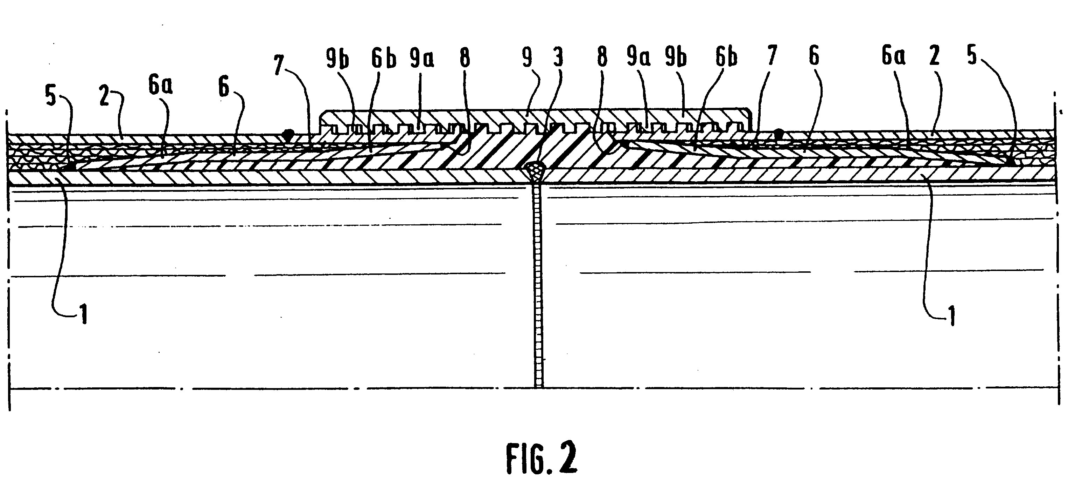

On a représenté sur la figure 2 une variante du mode de réalisation de la figure 1 dans laquelle les extrémités 7 des enveloppes tubulaires externes 2 comportent chacune des filets mâles 9b sur lesquels s'engagent les filets femelles 9a du manchon 9 avec un jeu suffisant pour compenser les inexactitudes de pas et les défauts d'alignement résultant de la soudure 3 des éléments tubulaires internes 1.

Dans cette variante, les enveloppes tubulaires internes 1 présentent au droit du manchon 9 une zone d'une longueur suffisante dans laquelle elles sont indépendantes des collerettes 6 et des enveloppes externes 2 de manière à pouvoir subir dans cette zone une flexion élastique suffisante pour que les filets mâles 9b des extrémités 7 des enveloppes externes 2 puissent prendre appui sur les filets femelles 9a du manchon 9 en compensant le jeu existant entre ces filets de manière à transmettre les efforts de compression ou de traction entre le manchon et les extrémités des enveloppes tubulaires externes 2 afin d'assurer une continuité de la résistance mécanique de la conduite au niveau du raccord.

Conformément à la variante représentée sur la figure 2, les collerettes 6 qui ont une partie centrale cylindrique prolongée par deux surfaces tronconiques 6a et 6b sont soudées à une de leurs extrémités en 8 à l'extrémité des enveloppes tubulaires 2 et à leur autre extrémité en un point 5 relativement éloigné de la soudure 3 qui réunit les deux éléments tubulaires internes 1.

A titre d'exemple, les soudures 5 des deux collerettes 6 sur les enveloppes internes 1 peuvent être distantes d'environ 1 mètre.

## Revendications

1. Conduite pour le transport de fluides, notamment d'hydrocarbures, constituée par des tronçons de tubes d'acier isolés thermiquement, du type comportant une enveloppe tubulaire externe en acier (2), une enveloppe cylindrique interne en acier (1) de plus faible diamètre, l'enveloppe interne étant soudée de manière étanche à l'enveloppe externe à chacune des extrémités des tronçons de tubes en laissant entre les deux enveloppes un volume annulaire fermé, et dans laquelle au niveau de chaque raccord entre deux tronçons de tubes, les extrémités des enveloppes internes (1) des deux tronçons sont soudées (3) l'une à l'autre, tandis qu'un manchon (9) réunit les extrémités (7) des enveloppes externes (2) de telle sorte que lorsqu'il s'exerce sur la conduite des efforts de traction, de compression ou de flexion, ledit manchon (9) communique ces efforts aux enveloppes externes (2) en conférant à la conduite une résistance mécanique au niveau de chaque raccord qui est au moins égale à celle des tronçons de tube, caractérisée en ce que le manchon (9) est vissé sur l'une au moins des enveloppes externes (2) par un filetage cylindrique (9a, 9b), de préférence à front de filets droits, qui comportent entre les filets mâles (9b) et filets femelles (9a) un jeu qui est suffisant pour compenser les défauts d'alignement et de positionnement des deux tronçons, et en ce que l'espace (10) compris entre les filets mâles (9b) et les filets femelles (9a) est garni par une substance, par exemple polymérisable, qui transmet les efforts de compression ou de traction s'exerçant entre le manchon (9) et les enveloppes externes (2).

2. Conduite selon la revendication 1, caractérisée par le fait que la longueur libre des enveloppes tubulaires internes (1) au droit du raccord entre les deux tronçons est suffisante pour que par la flexion de cette longueur libre, les filets femelles (9a) du manchon (9) viennent prendre appui sur les filets mâles (9b) des extrémités (7) des enveloppes tubulaires externes (2) afin de supporter les contraintes de compression, de traction ou de flexion.

3. Conduite selon la revendication 2, caractérisée par le fait que les collerettes (6) sont soudées aux extrémités (8) des enveloppes externes (2) en des points éloignés (5) des extrémités des enveloppes internes (1).

4. Conduite selon l'une quelconque des revendications 1 à 3, caractérisée par le fait que ladite substance est injectée entre les filets (9a) du manchon (9) et ceux (9b) des enveloppes externes.

5. Conduite selon l'une des revendications 1 à 4, caractérisée par le fait que la substance introduite entre les filets (9a, 9b) est une résine telle qu'une résine époxy dont la polymérisation s'effectue sans retrait ou avec expansion.

6. Conduite selon l'une des revendications 1 à 4, caractérisée par le fait que la substance introduite entre les filets (9a, 9b) est un élastomère polymérisable ou un produit tel que un brai de houille qui est appliqué à chaud.

7. Conduite selon l'une quelconque des revendications précédentes, caractérisée par le fait qu'un matériau isolant est placé dans le volume délimité par le manchon (9) et les enveloppes internes (1).

8. Conduite selon l'une quelconque des revendications précédentes, caractérisée par le fait que les extrémités de l'enveloppe interne (1) et de l'enveloppe externe (2) d'un tronçon de tube sont réunies par soudure (4, 8) par exemple par l'intermédiaire d'une collerette (6) après que l'on ait conféré à l'enveloppe interne (1) un allongement par rapport à l'enveloppe externe (2) qui correspond sensiblement à celui qui existe lorsque l'enveloppe interne (1) est soumise par rapport à l'enveloppe externe (2) à un écart de température qui est environ égal à la moitié de l'écart de température qui existera lors de l'utilisation de la conduite qui provoquera l'échauffement de son enveloppe interne.

9. Conduite selon la revendication 8, caractérisée par le fait que pour réaliser l'assemblage de l'enveloppe interne (1) et de l'enveloppe externe (2) d'un tronçon de tube, on préchauffe l'enveloppe interne (1) jusqu'à environ la moitié de l'écart de température qui doit exister entre l'enveloppe interne (1) et l'enveloppe externe (2) lors de l'utilisation de la conduite.

10. Conduite selon l'une quelconque des revendications précédentes, caractérisée par le fait que le volume annulaire fermé compris entre les deux enveloppes (1, 2) d'un tronçon de canalisation est garni d'une pluralité de feuilles minces, d'un isolant anti-rayonnement thermique (22) tel que des feuilles de quelques centièmes de millimètres d'épaisseur d'aluminium.

11. Conduite selon la revendication 10, caractérisée par le fait que les feuilles (22) sont séparées par des structures lacunaires (23) non conductrices de la chaleur.

12. Conduite selon l'une quelconque des revendications précédentes, caractérisée par le fait que des organes d'écartement en matériau peu conducteur de la chaleur (24) sont disposés de place en place dans le volume fermé compris entre l'enveloppe interne (1) et l'enveloppe externe (2).

13. Conduite selon l'une quelconque des revendications précédentes, caractérisée par le fait que l'on réalise le vide dans le volume compris entre l'enveloppe interne (1) et l'enveloppe externe (2).

14. Conduite selon l'une quelconque des revendications 1 à 12, caractérisée par le fait que l'on introduit dans le volume annulaire compris entre l'enveloppe interne (1) et l'enveloppe externe (2) un gaz peu conducteur de la chaleur tel que du tétrachlorure de carbone ou du chloroforme.

15. Conduite selon l'une quelconque des revendications précédentes, caractérisée par le fait que l'enveloppe interne (1) et éventuellement les collerettes (6) sont réalisées en un métal ayant un faible coefficient de dilatation.

## Patentansprüche

1. Rohrleitung für den Transport von Flüssigkeiten, insbesondere Kohlenwasserstoffen, die aus wärmeisolierten Eisenrohrstücken des Typs zusammengesetzt ist, der eine äußere rohrförmige Umhüllung aus Eisen (2) und eine innere zylindrische Umhüllung aus Eisen (1) mit geringerem Durchmesser umfaßt, wobei die innere Umhüllung an jeder der Extremitäten der Rohrstücke wasserdicht an die äußere Umhüllung geschweißt ist, was zwischen den beiden Umhüllungen ein eingeschlossenes ringförmiges Volumen läßt, wobei in der Rohrleitung auf der Höhe jeder Verbindung zwischen zwei Rohrstücken die Extremitäten der inneren Umhüllungen (1) der beiden Rohrstücke miteinander verschweißt sind (3), während eine Muffe (9) die Extremitäten (7) der äußeren Umhüllungen (2) derart vereinigt, daß, wenn auf die Rohrleitung eine Zug-, Druck- oder Biegebeanspruchung ausgeübt wird, die Muffe (9) die Beanspruchungen auf die äußeren Umhüllungen (2) überträgt, wobei der Rohrleitung auf der Höhe von jeder Verbindung eine mechanische Widerstandsfähigkeit verliehen wird, die mindestens gleich der der Rohrstücke ist, dadurch gekennzeichnet, daß die Muffe (9) auf mindestens eine der äußeren Umhüllungen aufgeschraubt ist mittels eines zylindrischen Gewindes (9a,9b), vorzugsweise einem Trapezgewinde, das zwischen dem Außengewinde (9b) und dem Innengewinde (9a) ein Spiel aufweist, das ausreichend ist, um Ausrichtungsdifferenzen und Differenzen der Position zwischen den beiden Rohrstücken auszugleichen, und wobei der Raum (10) zwischen dem Außengewinde (9b) und dem Innengewinde (9a) mit einer Substanz versehen ist, die beispielsweise polymerisierbar ist und die Zug-, Druck- und Biegebeanspruchungen aufnimmt, die zwischen der Muffe (9) und den äußeren Umhüllungen (2) entstehen.

2. Rohrleitung nach Anspruch 1,
**dadurch gekennzeichnet,**
daß die freie Länge der inneren rohrförmigen Umhüllungen (1) auf Höhe der Verbindung zwischen den beiden Rohrstücken ausreichend ist, so daß durch die Biegung dieser freien Länge sich die Innengewinde (9a) der Muffe (9) auf den Außengewinden (9b) der Extremitäten (7) der äußeren rohrförmigen Umhüllungen (2) abstützen, um die Druck-, Zug- oder Biegebeanspruchungen zu tragen.

3. Rohrleitung nach Anspruch 2,
**dadurch gekennzeichnet,**
daß die Flansche (6) an die Extremitäten der äußeren Umhüllungen (2) an den Punkten (5) angeschweißt sind, die von den Extremitäten der inneren Umhüllungen (1) entfernt sind.

4. Rohrleitung nach einem der Ansprüche 1 bis 3,
**dadurch gekennzeichnet,**
daß die Substanz zwischen das Gewinde (9a) der Muffe (9) und das Gewinde (9b) der äußeren Umhüllung injiziert wird.

5. Rohrleitung nach einem der Ansprüche 1 bis 4,
**dadurch gekennzeichnet,**
daß die zwischen die Gewinde (9a,9b) eingebrachte Substanz ein Harz wie ein Epoxyharz ist, bei dem die Polymerisation ohne Schrumpf oder mit Expansion erfolgt.

6. Rohrleitung nach einem der Ansprüche 1 bis 4,
**dadurch gekennzeichnet,**
daß die zwischen die Gewinde (9a,9b) eingebrachte Substanz ein polymerisierbares Elastomer oder ein Produkt wie ein Teerpech ist, das heiß aufgetragen wird.

7. Rohrleitung nach einem der vorhergehenden Ansprüche,
**dadurch gekennzeichnet,**
daß ein Isolierungsmaterial in das Volumen eingebracht wird, das durch die Muffe (9) und die inneren Umhüllungen (1) begrenzt ist.

8. Rohrleitung nach einem der vorhergehenden Ansprüche,
**dadurch gekennzeichnet,**
daß die Extremitäten der inneren Umhüllung (1) und der äußeren Umhüllung (2) eines Rohrstücks durch Schweißnaht (4, 8) vereinigt sind, beispielsweise mittels eines dazwischenliegenden Flansches (6), nachdem die innere Umhüllung (1) mit einer Verlängerung in bezug auf die äußere Umhüllung (2) versehen wurde, die genau derjenigen entspricht, die entsteht, wenn die innere Umhüllung (1) in bezug auf die äußere Umhüllung (2) einer Temperaturdifferenz ausgesetzt wird, die ungefähr der Hälfte der Temperaturdifferenz entspricht, die bei der Verwendung der Rohrleitung entsteht, welche eine Erwärmung ihrer inneren Umhüllung hervorruft.

9. Rohrleitung nach Anspruch 8,
**dadurch gekennzeichnet,**
daß zur Durchführung der Montage der inneren Umhüllung (1) und der äußeren Umhüllung (2) eines Rohrstücks die innere Umhüllung (1) gerade um ungefähr die Hälfte der Temperaturdifferenz vorgewärmt wird, die zwischen der inneren Umhüllung (1) und der äußeren Umhüllung (2) während der Verwendung der Rohrleitung bestehen muß.

10. Rohrleitung nach einem der vorhergehenden Ansprüche,
**dadurch gekennzeichnet,**
daß das geschlossene ringförmige Volumen zwischen den beiden Umhüllungen (1, 2) eines Rohrleitungsstücks mit mehreren dünnen Folien aus einem gegen Strahlung wirkenden Wärmeisolierungsmaterial (22) ausgestattet ist, wie Folien aus einige hundert Millimeter dickem Aluminium.

11. Rohrleitung nach Anspruch 10,
**dadurch gekennzeichnet,**
daß die Folien (22) durch löcherige Strukturen getrennt sind, die die Wärme nicht leiten.

12. Rohrleitung nach einem der vorhergehenden Ansprüche,
**dadurch gekennzeichnet,**
daß die Distanzeinrichtungen aus Material (24), das die Wärme schlecht leitet, in situ in dem geschlossenen Raum zwischen der inneren Umhüllung (1) und der äußeren Umhüllung (2) angeordnet werden.

13. Rohrleitung nach einem der vorhergehenden Ansprüche,
**dadurch gekennzeichnet,**
daß in dem Volumen zwischen der inneren Umhüllung (1) und der äußeren Umhüllung (2) Vakuum angelegt wird.

14. Rohrleitung nach einem der Ansprüche 1 bis 12,
**dadurch gekennzeichnet,**
daß in das ringförmige Volumen zwischen der inneren Unhüllung (1) und der äußeren Umhüllung (2) ein Gas mit schlechter Wärmeleitfähigkeit wie Tetrachlorkohlenstoff oder Chloroform eingebracht wird.

15. Rohrleitung nach einem der vorhergehenden Ansprüche,
**dadurch gekennzeichnet,**
daß die innere Umhüllung (1) und möglicherweise die Flansche (6) aus einem Metall mit einem niedrigen Ausdehnungskoeffizienten hergestellt sind.

## Claims

1. Pipe for carrying fluids, particularly hydrocarbons, consisting of thermally insulated steel tube sections, of the type comprising an outer tubular steel shell (2), an inner cylindrical steel shell (1) of smaller diameter, the inner shell being welded in a leaktight manner to the outer shell at each of the ends of the tube sections, whilst leaving between the two shells a closed annular volume, wherein at each joint between two tube sections the ends of the inner shells (1) of the two sections are welded (3) to one another whilst a sleeve (9) joins the ends (7) of the outer shells (2), such that when traction, compression or bending forces are exerted on the pipe, said sleeve (9) communicates these forces to the outer shells (2) whilst imparting to the pipe a mechanical strenght at each joint which is at least equal to that of the tube sections, the pipe being characterized in that the sleeve (9) is screwed onto at least one of the outer shells (2) by a cylindrical thread (9a, 9b), preferably with straight turn fronts, which comprise between the male turns (9b) and female turns (9a) a clearance which is sufficient to compensate for alignment and position defects in the two sections, and wherein the space (10) contained between the male turns (9b) and the female turns (9a) is lined with a substance, for example a polymerizable substance, which transmits the compression or traction forces exerted between the sleeve (9) and the outer shells (2).

2. Pipe according to claim 1, characterized in that the free lenght of the inner tubular shells (1) in line with the joint between the two sections is sufficient for, by the bending of this free lenght, the female turns (9a) of the sleeve (9) to bear the male turns (9b) of the ends (7) of the outer tubular shells (2) in order to withstand the compression, traction or bending stresses.

3. Pipe according to claim 2, characterized in that collars (6) are welded to the ends (8) of the outer shells (2) at points (5) away from the ends of the inner shells (1).

4. Pipe according to any one of claims 1 to 3, characterized in that said substance is injected between the turns (9a) of the sleeve (9) and those (9b) of the outer shells.

5. Pipe according to one of claims 1 to 4, characterized in that the substance introduced between the turns (9a, 9b) is a resin such as an epoxy resin or an araldite which polymerizes without contraction or with expansion.

6. Pipe according to one of claims 1 to 4, characterized in that the substance introduced between the turns (9a, 9b) is a polymerisable elastomer or a product such as a coal pitch which is applied hot.

7. Pipe according to any one of the preceding claims, characterized in that an insulating material is placed in the volume delimited by the sleeve (9) and the inner shells (1).

8. Pipe according to any one of the preceding claims, characterized in that the ends of the inner shell (1) and of the outer shell (2) of a tube section are joined by welding (4, 8), for example using a collar (6) after the inner shell (1) has been given an extension with respect to the outer shell (2) which corresponds substantially to that which exists when the inner shell (1) is subjected, with respect to the outer shell (2), to a temperature difference which is approximately equal to half the temperature difference which will exist when the pipe is in use and which will cause heating of its inner shell.

9. Pipe according to claim 8, characterized in that, in order to assemble the inner shell (1) and the outer shell (2) of a tube section, the inner shell (1) is preheated to approximately half the temperature difference which is to exist between the inner shell (1) and the outer shell (2) when the pipe is used.

10. Pipe according to any one of the preceding claims, characterized in that the closed annular volume contained between the two shells (1, 2) of a pipeline section is lined with a plurality of thin sheets of an anti-thermal radiation insulator (22) such as sheets with a thickness of a few hundredths of a millimetre of aluminium.

11. Pipe according to claim 10, characterized in that the sheets (22) are separated by cavity structures (23) which do not conduct heat.

12. Pipe according to any one of the preceding claims, characterized in that spacer members (24) made of a material which is a poor conductor of heat are periodically located in the closed volume between the inner shell (1) and the outer shell (2).

13. Pipe according to any one of the preceding claims, characterized in that a vacuum is created in the volume contained between the inner shell (1) and the outer shell (2).

14. Pipe according to any one of claims 1 to 12, characterized in that a gas which is a poor conductor of heat, such as carbon tetrachloride or chloroform is introduced into the annular volume contained between the inner shell (1) and the outer shell (2).

15. Pipe according to any one of the preceding claims, characterized in that the inner shell (1) and possibly the collars (6) are made of a metal which has a low coefficient of expansion.
